# EUROPEAN PATENT APPLICATION

(11) **EP 1 426 498 A1**
(43) Date of publication of application: **09.06.2004**
(21) Application number: 02707175.2
(22) Date of filing: 27.03.2002
(51) Int. Cl.: E02F 9/20, B60R 25/10

(54) **WORKING MACHINE BODY MANAGING SYSTEM**

(30) Priority: 10.09.2001 JP 2001274185
(71) Applicant: Shin Caterpillar Mitsubishi Ltd., Tokyo 158-8530 (JP)
(72) Inventor: MORIYA, Naoyuki, SHIN CATERPILLAR MITSUBISHI LTD, Tokyo 158-8530 (JP); BINNAKA, Madoka, SHIN CATERPILLAR MITSUBISHI LTD, Tokyo 158-8530 (JP); TANAKA, Masayuki, SHIN CATERPILLAR MITSUBISHI LTD, Tokyo 158-8530 (JP)
(74) Representative: Kemp, Paul Geoffrey
(86) International application number: PCT/JP2002/002966
(87) International publication number: WO 2003/023153

(57) **Abstract**

For a machine controller (12) for controlling a machine (11) of an operating machine, a personal digital assistant (PDA) (14) which makes communications via a non-contact communications medium (15) such as infrared light or radio waves. This PDA (14) has, at least, an anti-theft protecting function based on verification of an identification code, an operation managing function for obtaining operation management data, and a machine monitoring display function for monitoring by displaying a machine condition. By use of the single PDA (14), at least the anti-theft protecting function, operation managing function, and the machine monitoring display function can be carried out in an integrated manner, therefore, time, labour and expenses required to install devices for each function can be reduced and handling thereof is not decentralized and can be easily carried out by the single PDA (14).

## Description

### TECHNICAL FIELD

The present invention relates to a machine management system for an operating machine, comprising a personal digital assistant (hereinafter, referred to as a "PDA").

### Background Art

Previously, for anti-theft protection, for example, a method wherein an engine is enabled to start only by a specific key where an integrated circuit (namely, IC) embedded in the key and a machine controller communicate, and a method wherein restrictions are removed by inputting a secret identification number have been proposed.

In addition, for operation management data, a method wherein information is sent back to a base station via a satellite communications network, and a method wherein information is stored in an IC memory embedded in an anti-theft protection key and is returned to a base station have been suggested.

Furthermore, for a machine condition monitoring display function, a method for a display using a liquid crystal panel or a mechanical pointer has been generally employed.

And, these functions for anti-theft protection, operation management, and machine monitoring display have been realized in separate devices, respectively.

As such, it is necessary to install devices according to the functions, respectively, therefore, time, labour, and expenses required for installing these devices are considerable, and handling thereof becomes complicated.

The present invention has been made in view of such problems, and it is an object of the present invention to provide a machine management system for an operating machine, which is achieved by integrating at least an anti-theft protecting function, an operation managing function, and a machine monitoring display function.

### Disclosure of the Invention

A machine management system for an operating machine of the present invention comprises a communicable machine controller for controlling a machine of an operating machine, and a PDA which is communicable with this machine controller and has, by communicating with the machine controller, at least an anti-theft protecting function based on verification of an identification code, an operation managing function for obtaining operation management data, and a machine monitoring display function for monitoring by displaying a machine condition.

Thus, by this construction, at least the anti-theft protecting function, the operation managing function, and the machine monitoring display function can be carried out in an integrated manner by use of a single PDA, therefore, time, labour and expenses required to install the same can be reduced and handling thereof is not decentralized and can be easily carried out by a single PDA.

In addition, the machine management system for an operating machine of the present invention has a non-contact communications medium as a communications medium between a machine controller and a PDA. And, by connecting the machine controller and PDA via the non-contact communications medium, the PDA can be easily installed without limitations in wiring.

Furthermore, in the machine management system for an operating machine of the present invention, the operating machine has an operator's cab, wherein the PDA becomes communicable with the machine controller by entrance of a machine operator who carries the PDA with him/her into the operator's cab. Thereby, only by entrance of a machine operator who carries the PDA with him/her into the operator's cab, the PDA and machine controller become communicable with each other, thus time and labour for attaching and detaching the PDA with respect to the operator's cab can be saved.

In addition, in the machine management system for an operating machine of the present invention, the machine controller has a function to start the operating machine only when an operator identification code transmitted from the PDA by an operating machine operator is authenticated. Thereby, since the operating machine is started after an operator identification code transmitted from the operator's PDA is verified by a controller identification code that the machine controller posses, theft, etc., by unauthorized machine operation of a person other than the operator can be prevented.

Furthermore, in the machine management system for an operating machine of the present invention, the PDA has a function to communicate with a computer of a base station and obtains a modified operator identification code from the computer of the base station. Thereby, since a modification to a correct operator identification code cannot be carried out if the PDA is not connected to the computer of the base station, unauthorized use of the PDA by copying the operator identification code can be prevented.

In addition, in the machine management system for an operating machine of the present invention, the machine controller has a function to store operation management data collected from the machine and transmit the same to the PDA, and the PDA has a function to transmit, in a communication to obtain a modified operator identification code from the computer of the base station, the operation management data of the machine received from the machine controller to the computer of the base station.

Thereby, since the PDA must communicate with the computer of the base station without fail for updating the operator identification code, the base station can, in this communication, securely obtain the operation management data of the machine that the PDA has received from the machine controller.

Furthermore, in the machine management system for an operating machine of the present invention, the PDA can be carried with the operation management data of the machine obtained from the machine controller. Thereby, since the operation management data of the machine that the PDA has obtained from the machine controller can be returned to the base station as it is, operation management is possible without following procedures for satellite communications, etc.

In addition, to an operating machine in which a machine management system of the present invention is mounted, a tool which can be replaced depending on the type of operation and is hydraulically controlled is fitted, the tool has an identifying means for identifying itself from other tools, the PDA has a function to read the identifying means of the tool and transmit the same to the machine controller, and the machine controller has a function to perform controls suitable for the identified tool.

Thereby, the PDA reads the identifying means of the tool and transmits a tool type stored therein to the machine controller, whereby control can be switched to a control mode, which is preset in the machine controller and optimal for the tool, without individually adjusting the control systems of the operation machine.

Furthermore, in the machine management system for an operating machine of the present invention, the machine controller has a function to stop the machine and tool in a non-communicable condition with the PDA. Thereby, since the machine controller, which has become non-communicable with the PDA for a reason such that the operator carrying the PDA with him/her has left the machine or the PDA was detached from an appointed place, stops the machine and tool, malfunction and theft of the machine can be prevented.

### BRIEF DESCRIPTION OF THE DRAWINGS

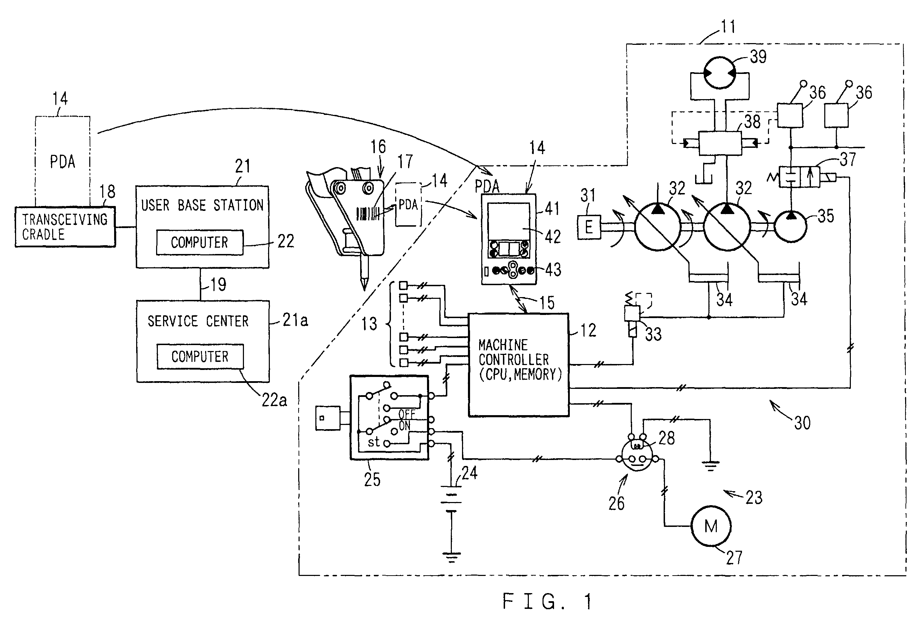

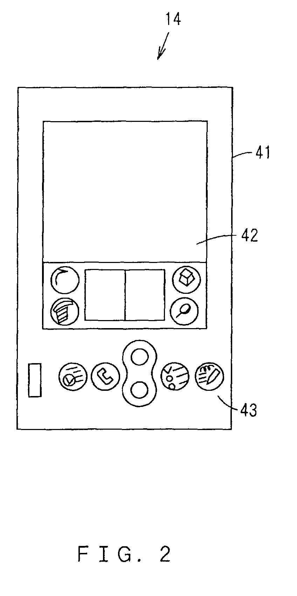

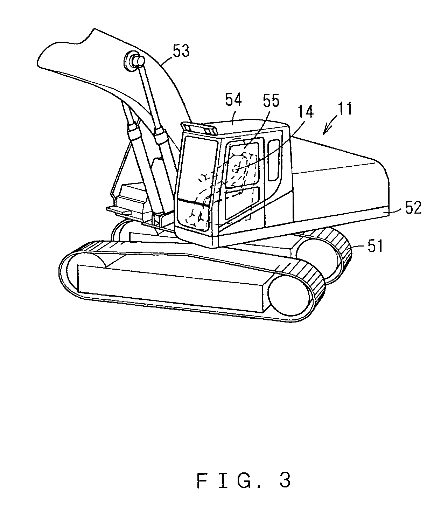

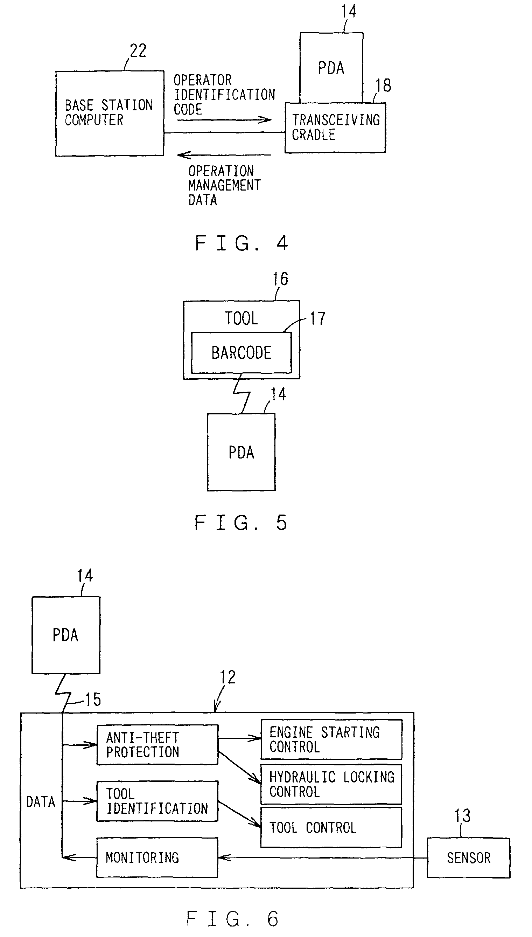

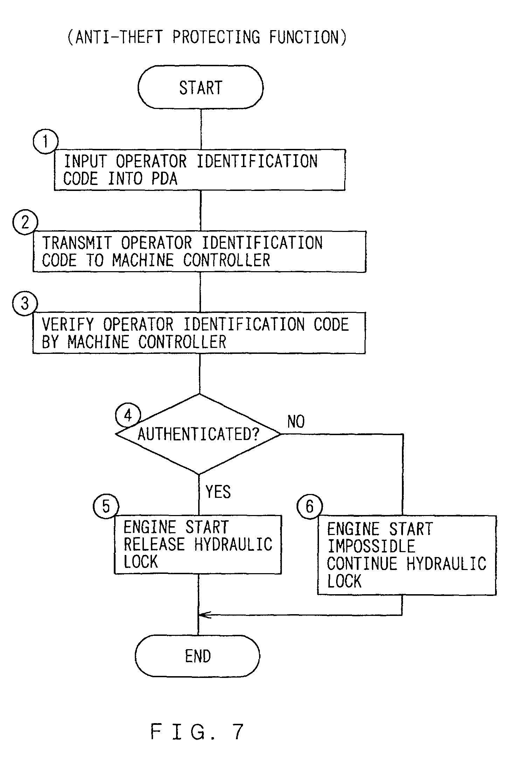

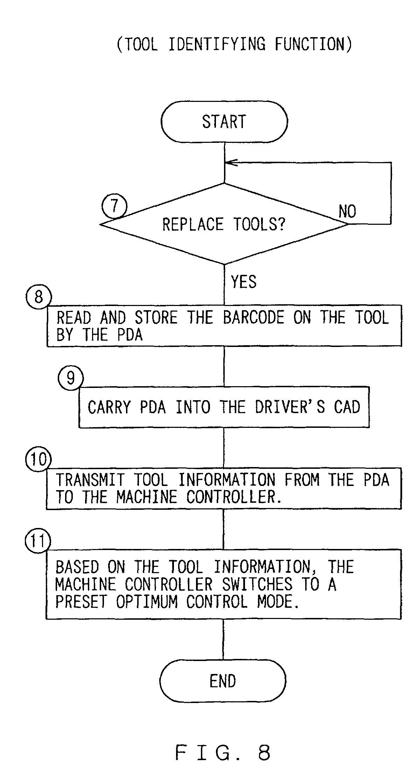

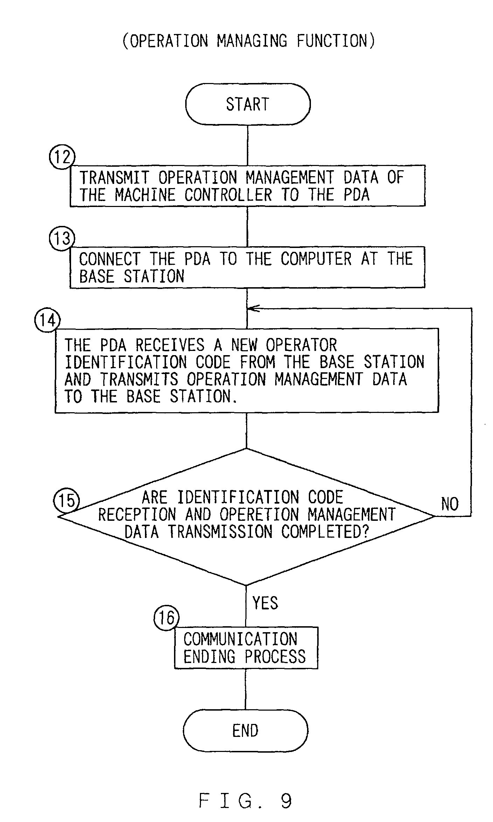

Fig. 1 is a schematic diagram showing a machine management system for an operating machine according to the present invention, Fig. 2 is a front view of a PDA used in the same machine management system same as the above, Fig. 3 is a perspective view of an operating machine used in the same machine management system as the above, Fig. 4 is a block diagram showing an information exchanging function between a base station computer and a PDA in the same machine management system as the above, Fig. 5 is a block diagram showing a reading function of a tool identifying means by a PDA of the same machine management system as the above, Fig. 6 is a block diagram showing respective functions for releasing theft protection, transferring a tool identification result, monitoring, and storing operation management data between a PDA and a machine controller in the same machine management system as the above, Fig. 7 is a flowchart for explaining the anti-theft protecting function in the machine management system as the above, Fig. 8 is a flowchart for explaining the tool identifying function in the same machine management system as the above, and Fig. 9 is a flowchart for explaining the operation managing function in the same machine management system as the above.

### DISCLOSURE OF THE INVENTION

Hereinafter, the present invention will be described in detail with reference to an embodiment shown in the drawings.

Fig. 1 shows a part of a hydraulic circuit and an electric circuit provided in a machine 11 of an operating machine such as a hydraulic excavator, and these circuits are controlled by a machine controller 12. This machine controller 12 comprises a central processing unit (namely, CPU), a memory, etc.

In the machine controller 12, various sensors 13 for searching and collecting, from the respective portions of the machine 11, machine information concerning, for example, pressure of the hydraulic circuit, etc., temperature of a hydraulic fluid and cooling water, etc., and liquid levels of oil and fuel, etc., rotating speeds of an engine, etc., and displacement amount of the movable portions are provided, and a function for totalling operating hours of the machine 11 is provided.

The machine controller 12 is communicable, and counter to this machine controller 12, a compact PDA 14, which is communicable with this machine controller 12, is installed.

This PDA 14 is, as an identification code verification means, an operation management data inputting means, and a machine operating information monitoring display device, installed in a manner carried into a cab as an operator's cab of an operating machine while being carried in an operator's breast pocket or the like, or is fitted, in a cab, at a position where the operator's field of view is not obstructed.

A communications medium between the machine controller 12 and PDA 14 is a non-contact communications medium 15 using infrared light or radio waves, etc., and by connecting the machine controller 12 and the PDA 14 via the non-contact communications medium 15, the PDA 14 can be easily attached and detached without limitations in wiring.

This PDA 14 is, by communicating with the machine controller 12, provided with an anti-theft protecting function based on authentication of an identification code, an operation managing function for obtaining operation management data, and a machine monitoring display function for monitoring by displaying a machine condition.

In addition, this PDA 14 is also provided with a tool identifying function for identifying a tool 16 which is, as an attachment, attached to and detached from the operating machine.

The tool 16 is, for example, a hydraulic breaker, a hydraulic crusher or the like, which is, in place of a bucket, fitted to the front end of a front linkage of a hydraulic excavator, and on the side surface thereof, an identification means 17 such as a barcode, therefore, by reading this identification means 17 by an optical barcode reading means connected to the PDA 14, an identification of the tool 16 is possible.

The PDA 14 is communicable with the machine controller 12 by use of infrared light or radio waves, etc., and by being set on a transceiving cradle 18 which is a PDA returning destination connected to a computer 22 of a user's base station 21 and in which a transceiver is integrated, the PDA 14 is also communicable with the computer 22 of this base station 21, and furthermore, this PDA 14 can exchange information with a computer 22a of a service centre 21a in a remote place, for example, through the Internet 19 or a communications satellite (unillustrated), etc.

An engine start circuit, a solenoid excitation circuit of a hydraulic control system, etc., are connected to an output part of the machine controller 12, and anti-theft protecting means for preventing theft of the operating machine are provided thereon.

As the anti-theft protecting means, an engine start control means 23 and a hydraulic lock control means 30 are provided, and the machine controller 12 is provided with a function for starting the machine 11 at a point in time where these anti-theft protecting means are released.

The engine start control means 23 is constructed so that, in the engine start circuit from a battery 24, through a key switch 25 and a relay 26, to a starter motor 27, power conduction to a coil 28 of a relay 26 is controlled by the machine controller 12, and when the anti-theft protecting function is activated, an exciting current is not supplied from the machine controller 12 to the coil 28 of the relay 26 even if the key switch 25 is switched to a start position, whereby the starter motor 27 is not started.

The hydraulic lock control means 30 is a mechanism for, for example, limiting a variable flow pump 32 driven by an engine 31 to a minimum discharge rate, and by controlling a solenoid value 33 connected to the machine controller 12 so as to activate a pump flow control means 34 such as a pump regulator connected to this solenoid valve 33 and thereby limiting the variable flow pump 32 to a minimum discharge rate, operations of a travelling system hydraulic motor and an operating machine system hydraulic motor of the hydraulic circuit to activate the machine 11, and a hydraulic actuator such as a hydraulic cylinder are restricted or stopped.

Furthermore, the hydraulic lock control means 30 blocks, by closing a safety lock valve 37 provided in a pilot pump discharging pipe, a pilot main pressure which is discharged from a pilot pump 35 and is supplied to a remote control value 36, whereby no hydraulic pilot pressure occurs even by a lever control of the remote control valve 36, therefore, a control value 38 whose stroke is changed by the hydraulic pilot pressure does not perform a pilot operation but is maintained at a neutral position, thus making it impossible to actuate a hydraulic actuator 39 such as a travelling system hydraulic motor or an operating machine system hydraulic motor.

As shown in Fig. 2, the PDA 14 contains, in a machine case 41, a central processing unit (a so-called CPU) for arithmetic processing, various memories for storing control programs and data, a communications interface, a power source portion, an interface with an external device, etc., and a display portion 42 and a control panel portion 42 and an control panel portion 43 are provided on the front surface of the machine case 41.

This display portion 42 of the PDA 14 uses a liquid crystal screen and can display various types of information with characters and icons by a Dot Matrix type display, and by an operation of various buttons on the display portion 42 and control panel portions 43, various types of information such as operation management information, machine monitoring information, etc., can be appropriately displayed.

For example, service hours of a filter and oil or an alarm screen to indicate the filter/oil replacing time are displayed, and a state of change in engine rotational speed, pump pressure, etc., is displayed in real time, and moreover, operating hours of the engine 31, pumps 32 and 35, and a hydraulic actuator 39 such as a travel motor are displayed. Furthermore, if the amount of engine oil, hydraulic oil for the hydraulic circuit, or cooling water is below a relevant prescribed value, such a machine state is displayed as an alarm, and moreover, a time, a selected hydraulic pressure setting, and a travelling speed, etc., after an oil and water level check are indicated.

As shown in Fig. 3, in the machine 11 of a hydraulic excavator as an operating machine, a revolving upper structure 52 is provided on an undercarriage 51 so as to be freely revolvable, and on this revolving upper structure 52, a cab 54 as an operator's cab is installed along with a front linkage 53. Inside of this cab 54, the PDA 14 is not always necessarily fixed to the machine 11 and may be left in a pocket of a working uniform of an operator 55, for example. In such a case, no time and labour to attach and detach the PDA 14 is necessary and if the operator wishes to check a display on the PDA 14, the operator can easily check the display by hand by taking out the PDA 14 from his/her pocket.

Herein, the PDA 14 may be freely detachably installed in the cab 54 at a position where operator 55's field of view is not obstructed.

Fig. 4 shows an information exchange example between the computer 22 of the user's base station 21 and PDA 14, and the PDA 14 which has obtained operation management data of the machine 11 from the machine controller 12 in the cab 54 is set on the transceiving cradle 18 which is a PDA returning destination, and through this transceiving cradle 18, communications are carried out between the PDA 14 and computer 22 of the base station 21, thus information is exchanged.

In addition, as shown in Fig. 1, between the computer 22 of the user's base station 21 and the computer 22a of the service centre 21a, communications are carried out via the Internet 19 or a communications satellite, etc., thus information is exchanged.

The PDA 14 transmits, when receiving, on the transceiving cradle 18, a new operator identification code, which has been transmitted from the computer 22 of the base station 21 and is updated daily, operation management data of the machine 11 received from the machine controller 12 on the previous day from the transceiving cradle 18 to the computer 22 of the base station 21. The operator identification code is verified by a controller identification code possessed by the machine controller 12.

As such, since the computer 22 of the base station 21 never fails to make communication with the PDA 14 for updating the operator identification code, the computer 22 can return obtain operation management data of the machine 11 at this time.

In addition, since the PDA 14 can return operation management data of the machine 11 obtained from the machine controller 12 to the base station 21 without making communications, operation management is possible without following procedures for a communications satellite, etc.

Fig. 5 shows an example wherein a barcode reading means of the PDA 14 reads the identification means (namely, a barcode) 17 provided on the tool 16 fitted to the front end portion of the front linkage 53, and the read tool information is stored in a memory provided in the PDA 14.

Fig. 6 shows a communications example between the PDA 14 and machine controller 12 by use of a non-contact communications medium 15 such as infrared light, radio waves, etc., in the cab 54, wherein an operator identification code which has been inputted, on the transceiving cradle 18, from the computer 22 of the base station 21 into the PDA 14 is transmitted from the PDA 14 carried into the cab 54 to the machine controller 12 by the non-contact communications medium 15, and only when the machine controller 12 authenticates the validity of the operator identification code, is the anti-theft protecting function released, thus the engine is started and the hydraulic lock is released.

In addition, if tool information stored in the PDA 14 is inputted into the machine controller 12 by the non-contact communications medium 15 by carrying the PDA 14 which has read and stored the identification means (barcode) 17 of the tool 16 into the cab 54 while keeping the same in a pocket of a working uniform of the operator 55, or by fitting the PDA 14 at an appointed position in the vicinity of the operator's seat, the tool type is identified by the tool identifying function of the machine controller 12, then an optimum mode is selected from corresponding control modes for each tool which have been preset in the machine controller 12, and control is switched to a tool control mode suitable for the tool 16 fitted to the front linkage 53, thus, for example, the pumping rate of the hydraulic circuit, etc., is controlled so as to become an optimum rate according to the tool 16 type.

Furthermore, operation management data concerning machine operating conditions such as accumulated engine operating hours, cooling water temperature, hydraulic oil temperature, fuel consumption, and self-diagnosed results, which is collected by the sensors 13 provided on respective portions of the machine, is transmitted to the PDA 14 by the monitoring display function of the machine controller 12 and is displayed for monitoring on the displaying portion 42 of the PDA 14.

Now, a detailed usage example of this PDA 14 will be explained.
(1) The operator 55 detaches the PDA 14 from the transceiving cradle 18 connected to the computer 22 of the base station 21 and puts the PDA 14 in his/her pocket.
(2) When the operator 55 gets in the cab 54 of a hydraulic excavator, the machine controller 12 and PDA 14 exchange an identification code via infrared light or radio waves.
(3) If the identification code is correct, starting the engine 31 becomes possible.
(4) The operator 55 operates the machine 11. During this time as well, the machine controller 12 and PDA 14 continue transmission and reception of the identification code.
(5) A monitoring item of the machine 11 is communicated from the machine controller 12 to the PDA 14 via infrared light or radio waves. If necessary, the operator 55 takes the PDA 14 out from his/her pocket and checks the contents.
(6) Operation management data is also communicated from the machine controller 12 to the PDA 14 at any time during machine operation.
(7) The operator 55 turns off the key switch 25 or gets out of the cab 54 while carrying the PDA 14, whereby the machine controller 12 is disabled from receiving the identification code, therefore, the engine 31 stops.
(8) The operator 55 returns the PDA 14 and mounts the PDA 14 on the transceiving cradle 18 connected to the computer 22 of the base station 21.
(9) The PDA 14 transmits, by the transceiving cradle 18, the operation management data stored in the memory to the computer 22 of the base station 21 and receives a new identification code from the computer 22 of the base station 21 via the transceiver base 18.
(10) The operation management data accumulated in the computer 22 of the base station 21 is, as required, sent to the computer 22a of the service centre 21a through the Internet 19, etc., and is utilized for maintenance, etc.

Now, actions of the above embodiment will be described with reference to the flowcharts shown in Fig. 7 through Fig. 9. Herein, the circled numbers in the drawings indicate step numbers.

Fig. 7 shows an anti-theft protecting function, wherein the computer 22 of the base station 21 transmits and inputs an operator identification code into the PDA 14 set on the transceiving cradle 18 by communicating with the transceiving cradle 18 (step 1). The PDA 14 carried into the cab 54 transmits, by the non-contact communications medium 15 such as infrared light or radio waves, the operator identification code to the machine controller 12 (step 2), the machine controller 12 verifies by a controller identification code stored in this machine controller 12 that the operator identification code transmitted from the PDA 14 is acceptable (step 3), and controls, only when the validity of the operator identification code is authenticated by the controller identification code (Yes in step 4), the relay 26 of the engine start control means 23 shown in Fig. 1 so as to reach an engine starting condition (namely, a condition where power is conducted to the coil 28) and also controls the solenoid valve 33 of the hydraulic lock control means 30 and the safety lock valve 37 so as to reach a hydraulic lock-released condition (namely, a solenoid excited condition) (step 5), and thereby can start the operating machine, and the machine controller 12 controls, when the validity of the operator identification code is not authenticated (NO in step 4), the relay 26 of the engine start control means 23 so as to reach an engine-start disabled condition (namely, a condition where power conduction to the coil 28 is stopped) and also controls the solenoid valve 33 of the hydraulic lock control means 30 and the safety lock valve 37 so as to reach a hydraulic lock continuing condition (namely, a solenoid unexcited condition) (step 6), and thereby controls the operating machine so as to be unable to start, whereby anti-theft protection can be realized.

In this case, the PDA 14 and the machine controller 12 are respectively provided with a function for communicating with the computer 22 of the user's base station 21, and since these are required to receive, by communicating with the computer 22 of the base station 21, a correct operator identification code and a correct controller identification code, respectively, which have been transmitted from the computer 22 of the base station 21 and are updated daily, the operator 55 sets the PDA 14 on the transceiving cradle 18 to obtain a correct operator identification code from the computer 22 of the base station 21 each day before starting operation. Thereby, the operator identification code in the PDA 14 before being modified becomes useless, thus an unauthorized use by copying the operator identification code can be prevented.

Furthermore, in a condition where communication with the PDA 14 is disabled, since verification of the operator identification code by the controller identification code is impossible, the machine controller 12 cannot start the machine 11 and the tool 16 by means of the engine start control means 23 and hydraulic lock control means 30, etc., and are provided with a function to stop these.

Therefore, when the PDA 14 is separated from a predetermined position where communication with the machine controller 12 is possible, if the operator 55, for example, steps outside the cab 54 while carrying the PDA 14 in his/her pocket or detaches the PDA 14 installed in the cab 54 and takes it outside the cab 54, the machine 11 and tool 16 automatically stop, thus malfunction and theft can be prevented.

Fig. 8 shows a tool identifying function. To the operating machine, a tool 16 which can be replaced depending on the type of operation and is hydraulically controlled is fitted, and since this tool 16 is provided with an identifying means 17 such as a barcode for identifying itself from other tools, when this tool 16 is replaced (YES in step 7), the identifying means 17 of the tool 16 is read out by the PDA 14 taken out from the cab 54 and the tool information is stored in the memory of the PDA 14 (step 8), this PDA 14 is carried into the cab 54 and is made communicable to the machine controller 12 while being kept on the operator, or is made communicable to the machine controller 12 by being installed at a predetermined position in the cab 54 (step 9), the tool information is transmitted from the PDA 14 to the machine controller 12 (step 10), the machine controller 12 is, based on the tool information, switched to an optimum control mode preset in the machine controller 12 (step 11), therefore, it is unnecessary to individually adjust the control systems of the operating machine.

For example, at the time of replacement of the tool 16, the machine controller 12 selects, based on the tool information from the PDA 14, one optimum feature from a plurality of pump controlling features corresponding to a plurality of types of preset tools 16, and controls a flow rate of the hydraulic circuit, etc., based on the selected pump features.

As shown in Fig. 9, since the machine controller 12 contains, in the memory, operation management data collected from the sensors 13 of the machine 11, this operation management data of the machine controller 12 is transmitted to the PDA 14 inside the cab 54 via infrared light or radio waves and is stored in the memory of the PDA 14 (step 12). This PDA 14 is carried back and installed on the transceiving cradle 18 to be connected to the computer 22 of the base station 21 (step 13), the PDA 14 transmits, in a communication for obtaining a new modified operator identification code from the computer 22 of the base station 21, operation management data of the machine 11 received from the machine controller 12 to the computer 22 of the base station 21 (step 14). After completion of the operator identification code reception and operation management data transmission (YES in step 15), a communications ending process can be carried out (step 16).

As such, for updating the operator identification code, the PDA 14 must communicate with the computer 22 of the base station 21 without fail, so the base station 21 can securely obtain operation management data of the machine 11, which the PDA 14 has received from the machine controller 12.

Now, the characteristics described in the above will be collectively enumerated.

By connecting the machine controller 12 and the PDA 14 via the non-contact communications medium 15 such as infrared light or radio waves, attachment and detachment of the PDA 14 becomes easy.

The identification means 17 indicated on the tool 16 by a barcode or the like is read by the PDA 14, and the tool information can be stored.

The PDA 14 transmits tool information to the machine controller 12 and can, based thereon, automatically switch over tool controlling methods by the machine controller 12.

An operator identification code is transmitted from the PDA 14 to the machine controller 12 by the communications medium 15 such as infrared light or radio waves and this operator identification code is verified by a controller identification code of the machine controller 12, whereby theft prevention can be realized.

If the PDA 14 is removed from an appointed place, since the operator identification code cannot be verified, the machine 11 stops and the tool 16 also stops. Therefore, malfunction of the machine 11 can be prevented and theft can be prevented.

By returning the PDA 14 which has received operation management data of the machine 11 from the machine controller 12 and stored the data to the place (place where the transceiving cradle 18 exists) where communications with the user's base station 21 are possible, operation management data of the machine 11 can be substantially returned to the base station 21, therefore, operation management is possible without following procedures for a communications satellite, etc.

The operator identification code cannot be modified to a correct operator identification code unless it is modified daily and the PDA 14 is connected to the computer 22 of the base station 21. Thereby, the PDA 14 is prevented from being copied.

For updating the operator identification code, the PDA 14 must make communication with the computer 22 of the base station 21 without fail, therefore, in this communication, the base station 21 can securely obtain operating management data of the machine 11, which the PDA 14 has received from the machine controller 12.

Since the PDA 14 communicates with the machine controller 12 by means of the non-contact communications medium 15 such as infrared light or radio waves, limitations concerning the installation location when being installed in the cab 54 are hardly imposed thereon. Therefore, the PDA 14 can be installed at an arbitrary position in the cab 54 where the field of view is not obstructed, or can be used in a condition where the PDA 14 has been carried into the cab 54 while being kept in, for example, a breast pocket of the working uniform of the operator 55.

In the case where the PDA 14 is used in a condition where the PDA 14 has been carried into the cab 54 while being kept in, for example, a pocket of the operator 55, if the operator steps outside the cab 54 while carrying the PDA 14 with him/her, the machine controller 12 cannot receive an identification code and verification of the identification codes becomes impossible, therefore, the engine 31 and hydraulic circuit stop and do not restart. Thereby, malfunction of the machine 11 and tool 16 can be prevented and theft of the machine 11 can be prevented.

As in the above, by using the intelligent PDA 14, all functions of the anti-theft protecting function, tool identifying function, operation managing function, and machine monitoring display function can be carried out in an integrated manner, therefore, time, labour and expenses required to install the same can be reduced and handling thereof are not decentralized and can be easily carried out by one PDA 14.

### Industrial Applicability

This machine management system can be applied not only to machine management of a hydraulic excavator but also to machine management of other operating machines such as, for example, a bulldozer and a loader.

## Claims

1. A machine management system for an operating machine comprising:
a communicable machine controller for controlling a machine of an operating machine, and
a personal digital assistant (PDA) which is communicable with this machine controller and has, by communicating with the machine controller, at least an anti-theft protecting function based on verification of an identification code, an operation managing function for obtaining operation management data, and a machine monitoring display function for monitoring by displaying a machine condition.

2. A machine management system for an operating machine as set forth in Claim 1 having
a non-contact communications medium as a communications medium between a machine controller and a PDA.

3. A machine management system for an operating machine as set forth in Claim 1 or Claim 2, wherein
the operating machine has an operator's cab, and
the PDA becomes communicable with the machine controller by entrance of a machine operator who carries the PDA with him/her inside the operator's cab.

4. A machine management system for an operating machine as set forth in any of Claim 1 through Claim 3, wherein
the machine controller has a function to start the operating machine only when an operator identification code transmitted from the PDA by an operating machine operator is authenticated by a controller identification code stored in the machine controller.

5. A machine management system for an operating machine as set forth in Claim 4, wherein
the PDA has a function to communicate with a computer of a base station and obtains a modified operator identification code from the computer of the base station.

6. A machine management system for an operating machine as set forth in Claim 5, wherein
the machine controller has a function to store operation management data collected from the machine and transmit the same to the PDA, and
the PDA has a function to transmit, in a communication to obtain a modified operator identification code from the computer of the base station, the operation management data of the machine received from the machine controller to the computer of the base station.

7. A machine management system for an operating machine as set forth in any of Claim 1 through Claim 6, wherein
the PDA makes it possible to carry the operation management data of the machine obtained from the machine controller.

8. A machine management system for an operating machine as set forth in any of Claim 1 through Claim 7, wherein
a tool which can be replaced depending on the type of operation and is hydraulically controlled is fitted to the operating machine,
the tool has an identifying means for identifying itself from others,
the PDA has a function to read the identifying means of the tool and transmit the same to the machine controller, and
the machine controller has a function to perform controls suitable for the identified tool.

9. A machine management system for an operating machine as set forth in Claim 8, wherein
the machine controller has a function to stop the machine and tool in a non-communicable condition with the PDA.
